# EUROPÄISCHE PATENTSCHRIFT

(11) **EP 2 562 463 B1**
(45) Veröffentlichungstag und Bekanntmachung des Hinweises auf die Patenterteilung: **06.09.2017**
(21) Anmeldenummer: 12177840.1
(22) Anmeldetag: 25.07.2012
(51) Int. Cl.: F16N 13/00, F16N 7/38, F16N 25/02, F16N 25/04, F16N 29/02

(54) **Schmierstoffpumpeneinheit**
Lubricant pump unit
Unité de pompe à lubrifiant

(30) Priorität: 26.08.2011 DE 102011053022
(43) Veröffentlichungstag der Anmeldung: 27.02.2013
(73) Patentinhaber: Baier & Köppel GmbH & Co., 91257 Pegnitz (DE)
(72) Erfinder: Köppel, Bernhard, 91257 Pegnitz (DE); Brendel, Jürgen, 91278 Pottenstein (DE); Wollner, Alois, 91284 Neuhaus (DE)
(74) Vertreter: Zech, Stefan Markus

(56) Entgegenhaltungen:
- EP-A1- 0 499 810
- DE-A1- 3 430 040
- DE-A1- 3 624 982
- DE-A1- 19 955 865
- DE-A1-102005 032 480
- DE-U1-202008 000 748
- DE-U1-202010 016 974
- US-A- 4 326 604

## Beschreibung

Die Erfindung betrifft eine Schmierstoffpumpeneinheit, umfassend ein Pumpengehäuse mit mehreren Pumpengehäuseabschnitten, wobei in einem mittleren, ersten Pumpengehäuseabschnitt ein oder mehrere Pumporgane zum Fördern von Schmierstoff vorgesehen sind, wobei oberhalb des mittleren Pumpengehäuseabschnitts ein zweiter Pumpengehäuseabschnitt, der ein Schmierstoffreservoir umfasst, vorgesehen ist, und wobei unterhalb des mittleren Pumpengehäuseabschnitts ein dritter Pumpengehäuseabschnitt, der zur Aufnahme eines Antriebs ausgebildet ist, vorgesehen ist.

Derartige kompakte Schmierstoffpumpeneinheiten sind bereits seit längerem im Einsatz. Verwendung finden derartige Schmierstoffpumpeneinheiten insbesondere bei Kraftfahrzeugen, Baumaschinen, landwirtschaftlichen Maschinen, Industriemaschinen und Windkraftanlagen, wobei die Einsatzgebiete keineswegs auf die genannten Felder beschränkt sind.

Eine derartige kompakte Schmierstoffpumpeneinheit ist beispielsweise aus der DE 199 55 865 A1 bekannt.

Die Aufgabe der vorliegenden Erfindung besteht darin, eine derartige aus dem Stand der Technik bekannte Schmierstoffpumpeneinheit noch universeller einsetzbar auszugestalten.

Diese Aufgabe wird gelöst mit einer kompakten Schmierstoffpumpeneinheit nach den Merkmalen von Patentanspruch 1. Ein Kerngedanke der vorliegenden Erfindung besteht dabei darin, dass vorzugsweise als Bestandteil der Schmierstoffpumpeneinheit mindestens eine Förderstrommesseinrichtung zur Erfassung eines aktuellen Volumenstroms des geförderten Schmierstoffes vorgesehen ist.

Die Förderstrommesseinrichtung ist dabei als Bestandteil der Schmierstoffpumpeneinheit ausgebildet und in der Schmierstoffpumpeneinheit, vorzugsweise im ersten Pumpengehäuseabschnitt integriert angeordnet, besonders bevorzugt abstromseitig der ein oder mehreren Pumporgane.

Mit der Erfassung des geförderten Förderstroms innerhalb der Schmierstoffpumpeneinheit wird die Möglichkeit geschaffen, den Schmierstoffbedarf der jeweils angeschlossenen Schmierstellen noch wesentlich exakter zu erfüllen mit der Folge, dass einerseits eine schon aus wirtschaftlichen, aber auch aus Umweltschutzgesichtspunkten zu vermeidende Überschmierung verhindert wird, gleichzeitig aber auch eine Minderschmierung mit der erforderlichen Sicherheit ausgeschlossen ist. Gerade Viskositätsschwankungen von Schmierstoff, wie sie aufgrund von Temperaturänderungen zwangsläufig eintreten, führen zu der vorbeschriebenen Problematik, dass entweder eine Minder- oder eine Überschmierung eintreten kann. Mit der hier vorgeschlagenen erfindungsgemäßen Lösung wird jeweils die exakt geförderte Menge an Schmierstoff erfasst, so dass sichergestellt, insbesondere überwacht und/oder gesteuert werden kann, dass eine Schmierstelle genau die jeweils erforderliche Menge an Schmierstoff erhält.

In einer bevorzugten Weiterbildung ist abstromseitig der Förderstrommesseinrichtung eine Sektionaleinheit zur einstellbaren Aufteilung einer Schmierstoffausgabe auf eine Mehrzahl von Schmierstoffausgängen innerhalb der Schmierstoffpumpeneinheit, vorzugsweise innerhalb des ersten Pumpengehäuseabschnittes oder als Anbauteil am ersten Pumpengehäuseabschnitt angeordnet.

In einer besonders bevorzugten Ausgestaltung dient der über die Förderstrommesseinrichtung erfasste Schmierstofffluss als Grundlage, um festzulegen, wie die Aufteilung der Schmierstoffausgabe auf die Mehrzahl von Schmierstoffausgängen vorgenommen wird.

In einer möglichen Ausgestaltung weist die Sektionaleinheit ein in einem Gehäuseabschnitt verschieblich und/oder drehbar gelagertes Aufteilungselement auf, das je nach Translations- und/oder Rotationslage bedarfsweise eine Fluidverbindung zwischen einem Einlassabschnitt und einem oder einer Gruppe von im Gehäuseabschnitt ausgebildeten Sektional-Auslässen herstellt. Die Ausgestaltung einer Sektionaleinheit ist an sich bekannt, allerdings als separates, im Leitungsnetz angeordnetes Bauteil. Hier wird es als entscheidend angesehen, dass die Sektionaleinheit als Anbauteil der Schmierstoffpumpeneinheit in die Schmierstoffpumpeneinheit integriert wird oder optional sogar innerhalb der Schmierstoffpumpeneinheit, beispielsweise im ersten Pumpengehäuseabschnitt, aufgenommen ist.

In einer bevorzugten Ausgestaltung der Schmierstoffpumpeneinheit sind das oder die Pumporgane im ersten Pumpengehäuseabschnitt innerhalb einer ersten Funktionsebene (Pumporganebene) angeordnet. Parallel hierzu, aber versetzt angeordnet, ist eine zweite Funktionsebene (Auslasskanalebene) definiert, in der Kanalabschnitte aller den Pumporganen zugeordneter Auslasskanäle geführt sind. Durch diese Maßnahme ist eine sehr zweckmäßige bauliche Aufteilung getroffen, da sich dadurch notwendige Anpassungen der an sich universellen Pumpeinheit einfach und strukturiert durchführen lassen, um die Pumpeinheit auf einem bestimmten Anwendungsfall bzw. eine bestimmte Schmieraufgabe anzupassen.

In einer konkreten Ausgestaltung sind innerhalb der zweiten Funktionsebene (Auslasskanalebene) auch die Auslassanschlüsse zum Anschluss von zu Schmierstellen führenden Schmierstoffleitungen angeordnet.

In einer weiteren zweckmäßigen Ausgestaltung sind innerhalb der im ersten Pumpengehäuseabschnitt geführten Auslasskanäle Verschlusspositionen definiert, derart, dass über Verschlusselemente eine variable Kopplung der Pumporgane zur Erhöhung bzw. Erniedrigung einer gewünschten Fördermenge bewirkt werden kann. Durch diese bauliche Maßnahme wird die Pumpe weiter universell auf einen großen Bereich jeweils unterschiedlicher, bzw. jeweils benötigter Fördermengen anpassbar. Die Pumpeinheit kann insofern mit unterschiedlichen Kombinationen von offenen und verschlossenen Auslasskanälen betrieben werden, wobei der Schmierstofffluss verschlossener Auslasskanäle auf ein oder mehrere geöffnete Auslasskanäle geführt bzw. auch an die Pumpeneingangsseite rückgeführt werden kann.

In einer konkret möglichen Ausgestaltung stehen das oder die Pumporgane mit einem umlaufenden Exzenter, der mit dem Antrieb vorzugsweise drehmomentschlüssig gekoppelt ist, in Wirkverbindung. Obwohl prinzipiell eine Reihe unterschiedlicher Möglichkeiten für die Ausbildung und/oder den Antrieb des oder der Pumporgane zur Verfügung stehen, hat sich in der Praxis der Antrieb des oder der Pumporgane durch einen Exzenter bewährt.

In einer bevorzugten Ausgestaltung sind abstromseitig des oder der Pumporgane ein Drucksensor und/oder ein mechanisches Überdruckventil und/oder ein durch ein Rückflussventil öffenbarer Rückströmkanal, der zur Förderung von Schmierstoff an den Eingang des oder der Pumporgane ausgebildet ist, vorgesehen. In einer weiter, besonders bevorzugten Ausgestaltung sind Drucksensor und/oder mechanisches Überdruckventil und/oder Rückflussventil im ersten Pumpengehäuseabschnitt, besonders bevorzugt zumindest teilweise innerhalb der zweiten Funktionsebene (Auslasskanalebene) integriert angeordnet.

In einer bevorzugten Ausgestaltung ist das Rückflussventil als steuerbares Ventil derart ausgebildet, dass die Menge des rückgeführten Schmierstoffes in mehreren diskreten Stufen oder kontinuierlich gesteuert werden kann, wobei gleichzeitig natürlich auch eine Komplettsperrung oder Komplettrückführung des Rückströmkanals möglich ist. Mit einem insbesondere stetig steuerbaren Ventil lässt sich die rückgeführte Schmierstoffmenge vorzugsweise in einem Bereich von 0 % bis 100 % des durch die Pumporgane geförderten Schmierstoffes einstellen.

In einer bevorzugten Weiterbildung der Schmierstoffpumpeneinheit ist weiterhin eine zentrale elektronische Steuereinheit vorgesehen, um die Schmierstoffausgabe der Schmierstoffpumpeneinheit vorzugsweise unter Verwendung hinterlegter Steuerprogramme, zu steuern. Die zentrale elektronische Steuereinheit kann als elektrische, insbesondere gedruckte elektrische Schaltung vorliegen. Bevorzugterweise umfasst die zentrale elektronische Steuereinheit einen Prozessor. Die Schmierstoffausgabe kann unter Verwendung von Steuerprogrammen, die in der zentralen elektronischen Steuereinheit ganz oder teilweise hinterlegt sind und/oder aufgrund von extern hinterlegten Steuerprogrammen ablaufen. Im letzteren Fall weist die zentrale elektronische Steuereinheit eine Schnittstelle zur leitungsgebundenen oder leitungsfreien Kommunikation mit einer externen Steuereinheit auf. Die Signal- und Steuerbefehlübertragung kann dabei beispielsweise elektronisch oder optisch erfolgen.

In einer besonders bevorzugten Ausgestaltung steht die Förderstrommesseinrichtung mit der zentralen elektronischen Steuereinheit in Wirkverbindung. Für den Förderstrom repräsentative Daten werden insofern von der Förderstrommesseinrichtung an die zentrale elektronische Steuereinheit übermittelt. Die für die Förderstrommenge repräsentativen Daten können dabei beispielsweise auf den jeweils aktuellen Förderstrommengen, einer Mittelung von vorausgegangenen, nicht zu weit zurückliegenden, Förderstrommengen oder anderer geeigneter Messungen beruhen. In die für die Förderstrommenge repräsentativen Daten können auch andere Einflussgrößen eingehen. Beispielsweise kann eine Nachholung von vorhergegangenen, aber nicht ausgeführten Dosierungen (z. B. weil die Temperatur zu niedrig war) berücksichtigt werden.

In einer weiter bevorzugten Ausgestaltung stehen der Antrieb und/oder die Sektionaleinheit und/oder das Rückflussventil mit der zentralen elektronischen Steuereinheit in Wirkverbindung. Die zentrale elektronische Steuereinheit kann insofern auf unterschiedliche Weise auf die Betriebsbedingungen der Schmierstoffpumpeneinheit einwirken.

Die Erfindung wird nachstehend auch hinsichtlich weiterer Merkmale und Vorteile anhand der Beschreibung von Ausführungsbeispielen und unter Bezugnahme auf die nachstehenden Zeichnungen näher erläutert.

Hierbei zeigen:
- Fig. 1: eine Ausführungsform der erfindungsgemäßen Schmierstoffpumpeneinheit in perspektivischer Ansicht;
- Fig. 2: eine Ausführungsform der erfindungsgemäßen Schmierstoffpumpeneinheit in Draufsicht;
- Fig. 3A: eine Draufsicht auf eine Ausführungsform eines mittleren, ersten Pumpengehäuseabschnitts;
- Fig. 3B: eine Schnittansicht durch einen Bereich des mittleren, ersten Pumpengehäuseabschnitts zur Veranschaulichung der Funktionsweise einer möglichen Variante einer Förderstrommesseinrichtung;
- Fig. 3C: eine zur Schnittansicht nach Fig. 3B orthogonale Schnittansicht;
- Fig. 4A, 4B, 4C: Prinzipskizzen als Schnittansicht durch eine Sektionaleinheit zur Erläuterung deren Funktionsweise;
- Fig. 5: eine Schnittansicht durch den mittleren, ersten Pumpengehäuseabschnitt nach Fig. 3A; und
- Fig. 6A, 6B, 6C: Schnittansichten durch den ersten Pumpengehäuseabschnitt entlang der Linie VI-VI in Fig. 5 zur Erläuterung unterschiedlicher Betriebsmodi der Schmierstoffpumpeneinheit.

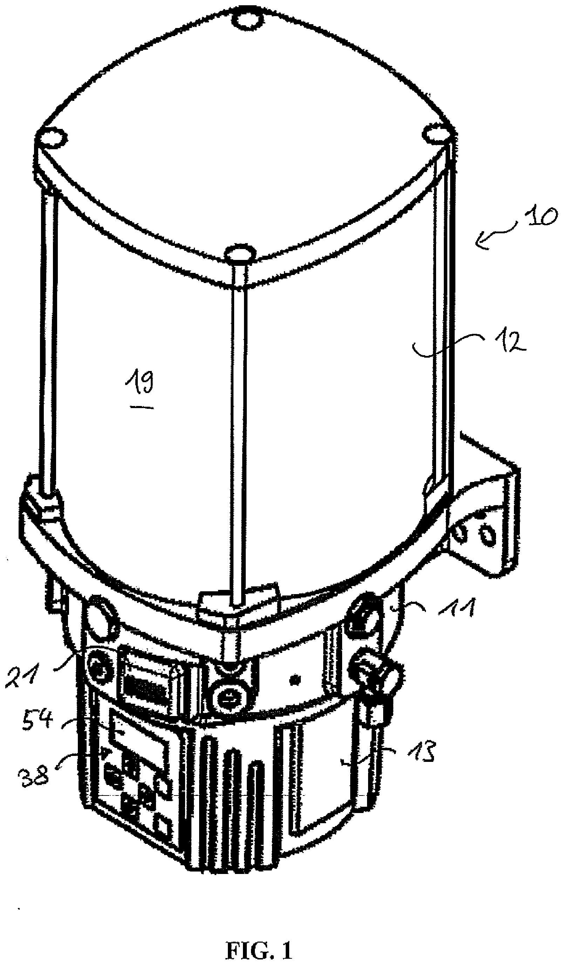

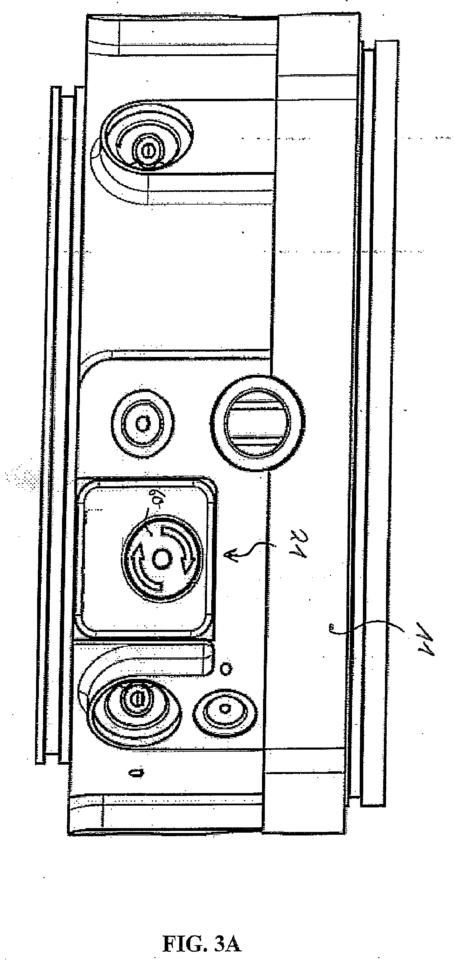

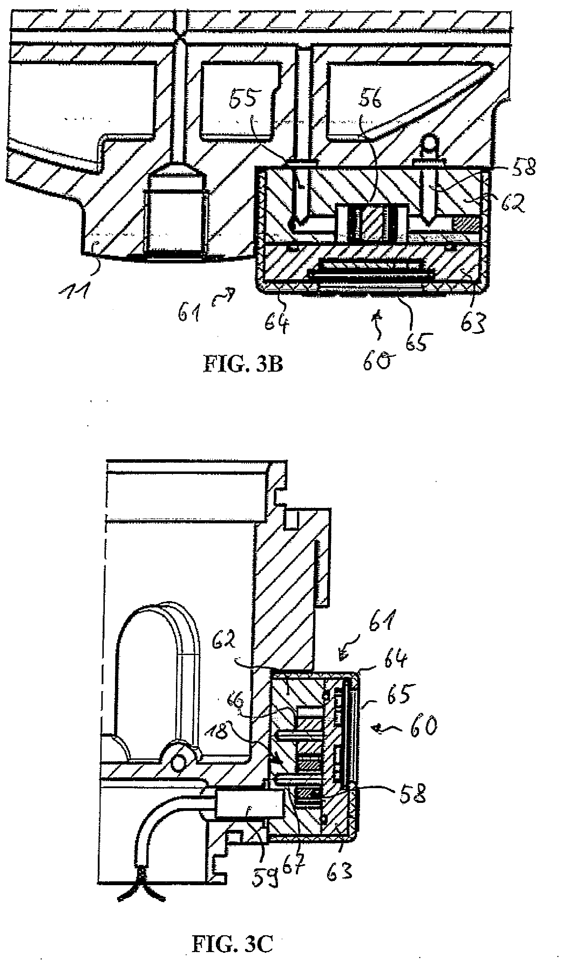

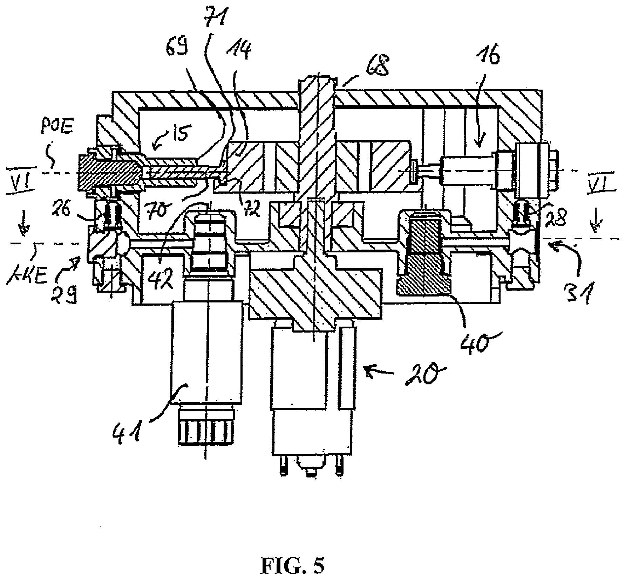

In Fig. 1 ist eine Ausführungsform einer Schmierstoffpumpeneinheit in perspektivischer Ansicht dargestellt. Die Schmierstoffpumpeneinheit umfasst ein Pumpengehäuse 10 mit mehreren Pumpengehäuseabschnitten 11, 12, 13. In einem mittleren, ersten Pumpengehäuseabschnitt 11 sind Pumporgane 15, 16 (vgl. Fig. 5) zum Fördern von Schmierstoff vorgesehen. Gleichzeitig ist im mittleren, ersten Pumpengehäuseabschnitt 11 auch eine Förderstrommesseinrichtung 21 integriert, die zur Erfassung eines aktuellen Volumenstroms des von den Pumporganen geförderten Schmierstoffs ausgebildet ist. Die Förderstrommesseinrichtung erfasst somit den aktuellen Volumenstrom des geförderten Schmierstoffes. Eine mögliche Ausgestaltung für die Förderstrommesseinrichtung 21 wird unter Bezugnahme auf die Figuren 3A bis 3C weiter unten noch detaillierter erläutert.

Oberhalb des mittleren, ersten Pumpengehäuseabschnitts ist ein zweiter Pumpengehäuseabschnitt 12 angeordnet, der ein Schmierstoffreservoir 19 ausbildet. Im Schmierstoffreservoir 19 ist eine vorbestimmte Menge an Schmierstoff bzw. Schmierfett untergebracht. Die Pumporgane des mittleren, ersten Pumpengehäuseabschnitts 11 stehen in Fluidverbindung mit dem im zweiten, oberen Pumpengehäuseabschnitt 12 ausgebildeten Schmierstoffreservoir 19 und können Schmierstoff bzw. Schmierfett aus dem Schmierstoffreservoir 19 ansaugen.

An der dem zweiten Pumpengehäuseabschnitt gegenüberliegenden Seite des ersten Pumpengehäuseabschnitts ist ein dritter Pumpengehäuseabschnitt 13 zur Aufnahme eines Antriebs 20 vorgesehen. Im dritten Pumpengehäuseabschnitt 13 können darüber hinaus noch weitere Funktionseinheiten der Schmierstoffpumpeneinheit vorgesehen sein, wie beispielsweise eine zentrale elektronische Steuereinheit 38 sowie eine Eingabe-/Ausgabeeinheit 54. Auch bestimmte, weitere am mittleren Pumpengehäuseabschnitt vorgesehene Komponenten, wie beispielsweise ein Rückflussventil 41 können am mittleren ersten Pumpengehäuseabschnitt 11 nach unten überragen und vom unteren, dritten Pumpengehäuseabschnitt 13 aufgenommen werden (vgl. Fig. 5).

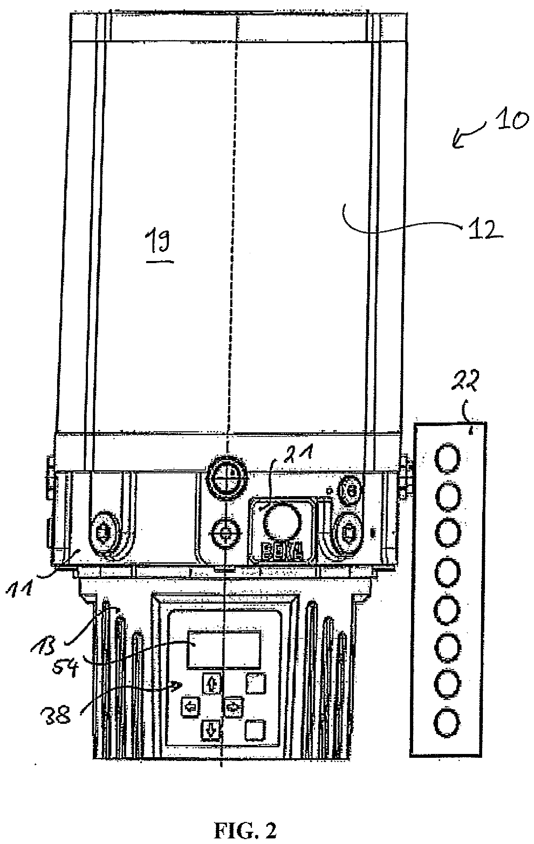

Die Frontalansicht nach Fig. 2 entspricht im Wesentlichen der Perspektivansicht der Schmierstoffpumpeneinheit nach Fig. 1, wobei in Fig. 2 zusätzlich als integraler Bestandteil der Schmierstoffpumpeneinheit vorgesehene Sektionaleinheit 22 mit dargestellt ist. Die Sektionaleinheit 22 ist bei der vorliegenden Ausführungsform allerdings nur relativ schematisch veranschaulicht. Bei der in Fig. 2 vorgesehenen Sektionaleinheit 22 handelt es sich um eine Sektionaleinheit, bei der ein translatorisch gelagertes Aufteilungselement 43 (hier nicht gezeigt) in einem Gehäuseabschnitt 44 verschieblich gelagert ist und dass je nach Translationslage bedarfsweise eine Fluidverbindung zwischen einem Einlassabschnitt 45 und einer Gruppe von im Gehäuseabschnitt 44 ausgebildeten Sektionalauslässen 46 bis 53 herstellt. Hinsichtlich Gestaltung und Aufbau einer Sektionaleinheit, bei dem ein Aufteilungselement translatorisch in einem Gehäuseabschnitt gelagert ist, wird beispielshaft auf die DE 20 2010 016 974 U1 verwiesen.

In Fig. 3A bis 3C ist eine Ausführungsform einer Förderstrommesseinrichtung 21, die als Bestandteil der Schmierstoffpumpeneinheit ausgebildet sein kann, näher veranschaulicht. Der von den Pumporganen 15, 16 geförderte Schmierstoff gelangt über einen Eintrittsabschnitt 55 in die Förderstrommesseinrichtung 21, die einen als hier als Zahnrad ausgebildeten Impeller 56 sowie eine Drehzahlsensoranordnung 18 sowie einen am Pumpenauslass zugeordneten Austrittsabschnitt 58 aufweist. Es versteht sich von selbst, dass auch von einem Zahnrad abweichende Bauformen für den Impeller in Betracht kommen, z. B. die Ausbildung als Ovalrad, etc. Die Förderstrommesseinrichtung 21 in der hier konkret beschriebenen Art und Weise misst insofern nicht unmittelbar einen Volumenstrom, sondern erfasst das zugeführte Volumen. Die Messung des Volumenstroms ist ebenfalls nicht unmittelbar möglich bzw. sinnvoll, da es sich jedenfalls bei der konkret beschriebenen Ausführungsform um eine Schmierstoffpumpeneinheit mit oszillierend arbeitenden Pumporganen handelt. Erst über die Berücksichtigung der Zeit ergibt sich ein rechnerischer Volumenstrom. Der Fluidstrom des Schmierstoffes wird insofern durch eine Drehzahl bzw. einen Drehwinkeldes Impellers 56 erfasst. Der Drehwinkel ist damit ein Maß für die aktuell geflossene Fluidmenge.

Die Drehzahlsensoranordnung 18 kann in unterschiedlicher Ausgestaltung realisiert sein. Beispielsweise ist es möglich, die Umdrehungszahl des Impellers 56 mechanisch, induktiv oder optisch abzugreifen. Bei der vorliegenden konkreten Ausführungsform ist ein kämmendes Sensorzahnrad 58 vorgesehen, das eine oder mehrere Flanken aus magnetischem Material aufweist bzw. bei dem eine oder mehrere Flanken magnetisiert sind bzw. bei dem ein oder mehrere Flanken mit einem magnetischen Material bestückt sind. Gleichzeitig ist ein Hallsensor 59 dem Sensorzahnrad 58 gegenüberliegend vorgesehen, um die Umdrehungszahl des Sensorzahnrades 58 als Maß für die geflossene Fluidmenge des Schmierstoffes abzugreifen.

Die Förderstrommesseinrichtung 21 kann gleichzeitig eine optische Durchflussanzeige 60 mit umfassen, in der vorliegenden Ausgestaltung konkret dadurch, dass die Rotation des Impellers 56 und oder des Sensorzahnrades 58 verfolgt werden kann. Hierzu sind Impeller 56 und Sensorzahnrad 58 in einem Messgehäuse 61 mit einer ersten, inneren Gehäusehälfte 62, einer zweiten, äußeren Gehäusehälfte 63 sowie einer Abdeckung 64, die gleichzeitig ein Fenster 65 ausbildet, aufgenommen. Sowohl der Impeller 56 als auch das Sensorzahnrad 58 sind jeweils über eine Welle 66, 67 an der ersten inneren Gehäusehälfte 62 rotatorisch gelagert. Axial sind Impeller 56 und Sensorzahnrad 58 auf den Wellen 66, 67 dadurch gehalten, dass die zweite, äußere Gehäusehälfte 63 über die Abdeckung 64 in Anlage an der ersten, inneren Gehäusehälfte 62 gehalten ist. Die Verbindung zwischen Abdeckung 64 und erster, innerer Gehäusehälfte 62 kann beispielsweise durch eine Verrastung, Verklebung und/oder Verschraubung (jeweils nicht gezeigt) erfolgen.

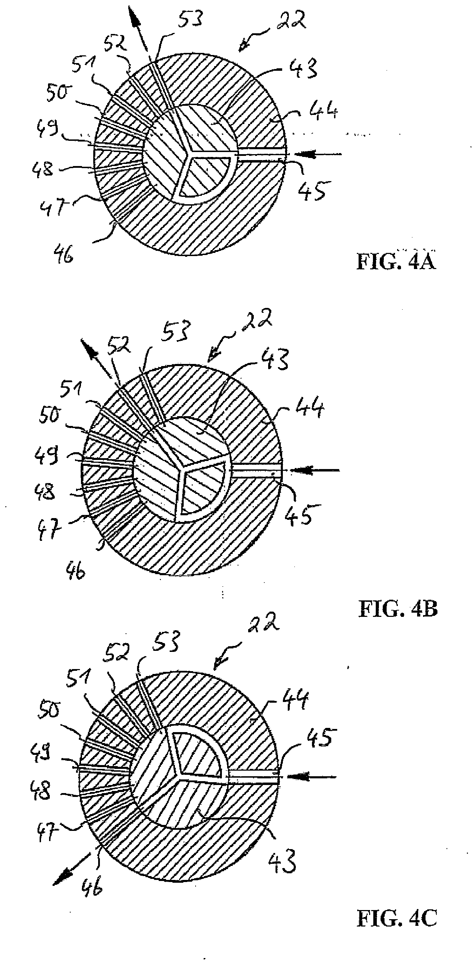

In Fig. 4A bis 4C ist das Prinzip einer Sektionaleinheit 22 näher veranschaulicht, wobei die Sektionaleinheit einen feststehenden Gehäuseabschnitt 44 und ein - bei der vorliegenden Ausgestaltung drehbar - im Gehäuseabschnitt 44 gelagertes Aufteilungselement 43 umfasst. Je nach Rotationslage des Austeilungselements 43 bezogen auf einen Einlassabschnitt 45 der Sektionaleinheit 22 wird eine Fluidverbindung zwischen einem bestimmten im Gehäuseabschnitt 44 ausgebildeten Sektionalauslass 46 bis 53 hergestellt.

Insofern kann, je nach dem welche Schmierstoffmenge durch einen bestimmten Sektionalauslass 46 bis 53 ausgegebenen werden soll, das Aufteilungselement 43 entsprechend lang in der jeweils angewählten Rotationsposition verharren, um dem vorbestimmten Sektionalauslass die Menge an Schmierstoff zuzuführen, die für den jeweiligen Sektionalauslass benötigt wird. Danach wird das Aufteilungselement 43 durch Rotation weitergeschaltet, und zwar vorzugsweise auf einen benachbarten Sektionalauslass, alternativ aber auch auf einen vorausgewählten anderen, nicht unmittelbar benachbarten Sektionalauslass. Ist das über den Einlassabschnitt 45 zugeführte Volumen bekannt, bevorzugtermaßen nämlich dadurch, dass es zuvor durch die Förderstrommesseinrichtung 21 erfasst wurde, kann über die Zeitspanne, in der das Aufteilungselement 43 in einer vorbestimmten Position gehalten wird, ein jeweils gewünschtes Volumen (cm³) zugemessen werden. Durch entsprechende Umrechnung lassen sich natürlich auch jeweils gewünschte Zumessungen in Gramm Schmierstoff berücksichtigen.

Bevorzugtermaßen erfolgt dies bei der Schmierstoffpumpeneinheit nach der vorliegenden Erfindung durch eine zentrale elektronische Steuereinheit 38, die ganz oder teilweise in der Schmierstoffpumpeneinheit selbst, ggf. aber auch extern ausgebildet sein kann. Von der zentralen elektronischen Steuereinheit 38 wird der von der Förderstrommesseinrichtung 21 abgetastete Volumenstrom (cm³ pro Zeiteinheit) erfasst. Nach der Bedarfsvorgabe an Schmierstoff für einen bestimmten Sektionalauslass 46 bis 53 errechnet die zentrale elektronische Steuereinheit 38, wie lange das Aufteilungselement 43 eine Fluidverbindung zwischen Einlassabschnitt 45 und dem bestimmten Sektionalauslass der Sektionaleinheit 22 halten muss bevor das Aufteilungselement 43 weiterschaltet.

In Fig. 5 ist der erste Pumpengehäuseabschnitt 11 in einer Schnittansicht dargestellt, wobei eine erste Funktionsebene eine Pumporganebene (POE) und eine zweite Funktionsebene eine Auslasskanalebene (AKE) definieren. Innerhalb der Pumporganebene sind das oder die Pumporgane 15, 16 angeordnet, wobei je nach Ausgestaltung ein, zwei oder auch mehr Pumporgane, beispielsweise drei Pumporgane vorgesehen sein können. Die Pumporgane 15, 16 werden von einem drehmomentschlüssig auf einer Antriebswelle 68 angeordneten Exzenter 14 angetrieben. Die Pumporgane umfassen in der vorliegenden Ausführungsform einen in einem Pumporgangehäuse 69 axial verschieblich gelagerten Kolben 70, wie dies an sich bekannt ist. Ebenfalls bekannt ist, dass der Exzenter 14 dazu ausgelegt ist, die Kolben 70 in die zugeordneten Pumporgangehäuse 69 hineinzudrücken und die Gegenbewegung wahlweise durch eine zwischen Pumporgangehäuse 69 und Kolben 70 wirksame Feder oder, wie bei der vorliegenden Ausführungsform, durch eine Zugbewegung des Exzenters 14 hervorgerufen werden kann. Zu diesem Zwecke weisen bei der vorliegenden Ausführungsform die Kolben 70 endseitig Kopfabschnitte 71 auf, die in entsprechende Aufnahmen 72 des Exzenters eingehängt sind.

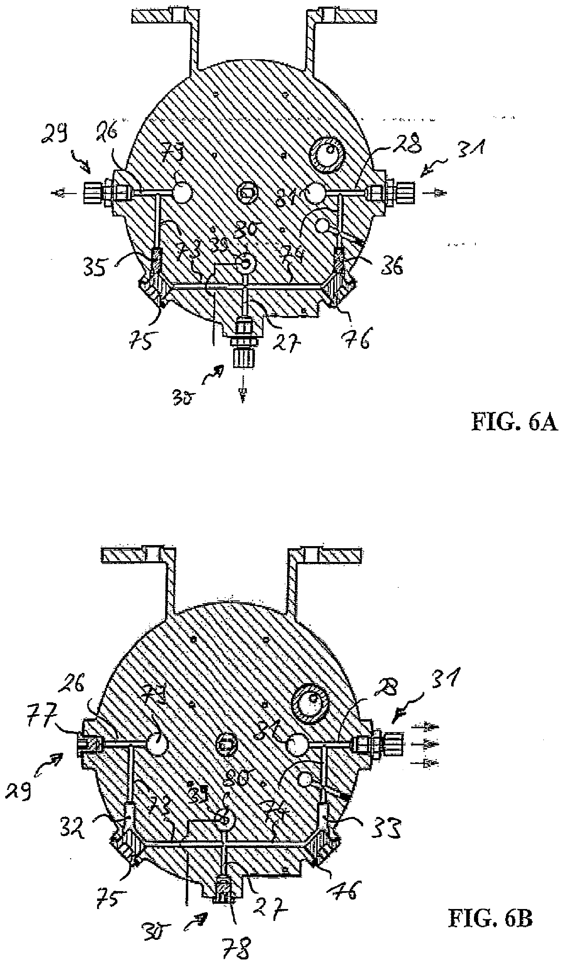

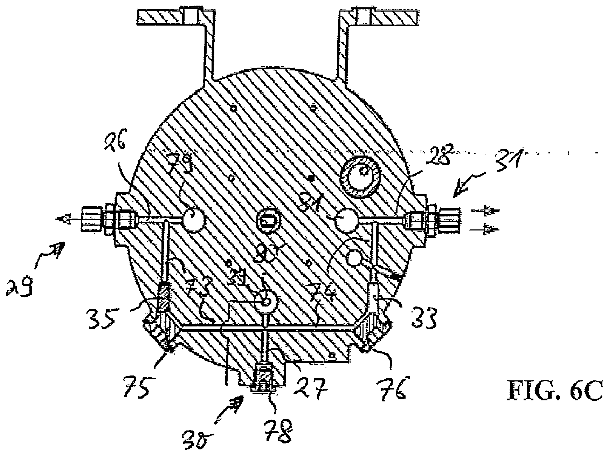

Der von den Pumporganen 15, 16 geförderte Schmierstoff gelangt von der Pumporganebene (POE) über entsprechende Leitungen in die Auslasskanalebene (AKE). In der Auslasskanalebene (AKE) sind verschiedene Schmierstoffführungen möglich, wie insbesondere aus den Darstellungen nach Fig. 6A, 6B sowie 6C erkennbar wird.

In Fig. 6A ist eine Benutzungsvariante veranschaulicht, bei der alle Auslasskanäle 26 bis 28 der drei Pumporgane 15, 16 jeweils einen eigenen Auslassanschluss 29 bis 31 definieren, ohne miteinander zu kommunizieren. Hierzu sind ein erster Verbindungskanal 73 zwischen Auslasskanal 26 und 27 sowie ein zweiter Verbindungskanal 74 zwischen Auslasskanal 27 und 28 durch Verschlusselemente 35, 36 blockiert. Erster Verbindungskanal 73 und zweiter Verbindungskanal 74 weisen eine im Normalfall durch einen einschraubbaren Stopfen 75, 76 verschließbare Öffnung auf.

Im Betriebsmodus nach Fig. 6A sind die Verschlusselemente 35, 36 in entsprechende Bohrungen im ersten Verbindungskanal 73 bzw. zweiten Verbindungskanal 74 in Nähe der durch Stopfen 75, 76 verschließbaren Öffnung eingesetzt, wobei gleichzeitig die Stopfen 75, 76 die Verschlusselemente 35, 36 in Position halten.

In einem abgewandelten Betriebsmodus gemäß Fig. 6B sind die Verschlusselemente 35, 36 entfernt, das heißt die Stopfen 75, 76 sind in die jeweiligen Öffnungen im ersten Verbindungskanal 73 bzw. zweiten Verbindungskanal 74 eingeschraubt, wobei die Stopfen 75, 76 im ersten Verbindungskanal 73 bzw. zweiten Verbindungskanal 74 nicht blockieren, sondern eine Fluidverbindung bestehen bleibt. Im konkreten Fall sind durch Entfernen der Verschlusselemente 35, 36 sowohl aus der ersten Verschlussposition 32 als auch der zweiten Verschlussposition 33 alle Auslasskanäle 26 bis 28 miteinander in Fluidverbindung. Allerdings sind im vorliegenden Betriebsmodus nach Fig. 6B erster Auslassanschluss 29 und zweiter Auslassanschluss 30 durch ein Verschlussstopfen 77, 78 blockiert, so dass der gesamte von den Pumporganen 15, 16 geförderte Schmierstoff über die jeweiligen Auslasskanäle 26 bis 28 und den ersten Verbindungskanal 73 sowie dem zweiten Verbindungskanal 74 zum dritten Auslassanschluss 31 geführt wird, mit der Folge, dass am dritten Auslassanschluss 31 bei baugleichen Pumpelementen 15, 16 die gegenüber dem Betriebsmodus nach Fig. 6A dreifache Fördermenge ansteht.

In Fig. 6C ist eine weitere mögliche Schmierstoffaufteilung veranschaulicht. Im Betriebsmodus nach der Fig. 6C ist an der ersten Verschlussposition 32 das Verschlusselement 35 eingesetzt und wird durch den Stopfen 75 in Position gehalten. Insofern ist der erste Verbindungskanal 73 gesperrt, der zweite Verbindungskanal 74 ist jedoch mangels Verschlusselement 36 an der zweiten Verschlussposition 33 offen. Die Folge ist, dass der Auslasskanal 26 des ersten Pumpenelements mit dem ersten Auslassanschluss 29 kommuniziert, die Auslasskanäle 27, 28 der zweiten und dritten Pumporgane 16 bis 17 jedoch über den zweiten Verbindungskanal 74 kombiniert sind und der Schmierstoffstrom der Auslasskanäle 27, 28 dadurch, dass der zweite Auslassanschluss 30 über einen Verschlussstopfen 78 blockiert ist, am dritten Auslassanschluss 31 ansteht.

Unter der Annahme, dass alle drei Pumporgane 15, 16 die gleiche Fördermenge liefern, steht am ersten Auslassanschluss 29 die Fördermenge eines Pumporgans, am dritten Auslassanschluss 31 die Fördermenge zweier Pumporgane an. Es sei an dieser Stelle aber auch erwähnt, dass selbstverständlich die Pumporgane unterschiedlich dimensioniert sein können, also die Pumporgane eine jeweils unterschiedliche Fördermenge bereitstellen können, so dass sich über die anhand der Fig. 6a bis 6c veranschaulichten Anschlussvarianten eine noch größere Anpassbarkeit auf die jeweils benötigten Schmieraufgaben ergibt. In mit den Auslasskanälen 26 bis 28 kommunizierenden Bohrungen 79, 80, 81 sind jeweils noch folgende Bauteile angeordnet: In einer mit dem ersten Auslassanschluss 29 kommunizierenden Bohrung 79 ein Rückflussventil 41, das als steuerbares Ventil ausgebildet ist über einen Rückströmkanal 42 Schmierstoff an den Eingang der Pumporgane15, 16 zurückströmen zu lassen. Das Rückflussventil 41 ist bevorzugtermaßen als einstellbares Ventil ausgebildet, so dass die Menge des rückgeführten Schmierstoffes in mehreren diskreten Stufen oder kontinuierlich eingestellt werden kann. Selbstverständlich kann der Rückstrom auch komplett gesperrt oder geöffnet werden.

In der mit dem Auslasskanal 27 kommunizierenden Bohrung 80 ist ein Drucksensor 39 angeordnet, um den Ausgangsdruck des Schmierstoffes nahe der Abstromseite der Pumporgane bzw. im Auslasskanal 29 erfassen zu können.

In der mit dem Auslasskanal 28 kommunizierenden Bohrung 81 ist schließlich noch ein mechanisches Überdruckventil 40 angeordnet, um beispielsweise bei einer Leitungsblockade hin zur Eingangsseite der Pumporgane 15, 16 zu öffnen und somit einen Leitungsbruch mit ggf. negativen Schäden für die Umwelt zu verhindern.

### Bezugszeichenliste:

- 10: Pumpengehäuse
- 11: erster Pumpengehäuseabschnitt
- 12: zweiter Pumpengehäuseabschnitt
- 13: dritter Pumpengehäuseabschnitt
- 14: Exzenter
- 15, 16: Pumporgane
- 18: Drehzahlsensoranordnung
- 19: Schmierstoffreservoir
- 20: Antrieb
- 21: Förderstrommesseinrichtung
- 22: Sektionaleinheit
- 26 bis 28: Auslasskanäle
- 29 bis 31: Auslassanschlüsse
- 32, 33: Verschlusspositionen
- 35, 36: Verschlusselemente
- 38: zentrale elektronische Steuereinheit
- 39: Drucksensor
- 40: Überdruckventil
- 41: Rückflussventil
- 42: Rückstromkanal
- 43: Aufteilungselement
- 44: Gehäuseabschnitt
- 45: Einlassabschnitt
- 46 bis 53: Sektional-Auslässe
- 54: Eingabe-/Ausgabeeinheit
- 55: Eintrittsabschnitt (Förderstrommesseinrichtung)
- 56: Impeller
- 58: Sensorzahnrad
- 59: Hall-Sensor
- 60: Optische Durchflussanzeige
- 61: Messgehäuse
- 62: erste, innere Gehäusehälfte
- 63: zweite, äußere Gehäusehälfte
- 64: Abdeckung
- 65: Fenster
- 66, 67: Welle
- 68: Antriebswelle
- 69: Pumporgangehäuse
- 70: Kolben
- 71: Kopfabschnitte
- 72: Aufnahmen
- 73: erster Verbindungskanal
- 74: zweiter Verbindungskanal
- 75, 76: Stopfen
- 77, 78: Verschlussstopfen
- 79, 80, 81: Bohrungen
- POE: Pumporganebene
- AKE: Auslasskanalebene

## Patentansprüche

1. Schmierstoffpumpeneinheit, umfassend ein Pumpengehäuse (10) mit mehreren Pumpengehäuseabschnitten (11, 12, 13),
wobei in einem mittleren, ersten Pumpengehäuseabschnitt (11) ein oder mehrere Pumporgane (15, 16) zum Fördern von Schmierstoff vorgesehen sind,
wobei oberhalb des mittleren Pumpengehäuseabschnitts (11) ein zweiter Pumpengehäuseabschnitt (12), der ein Schmierstoffreservoir (19) umfasst, vorgesehen ist, und
wobei unterhalb des mittleren Pumpengehäuseabschnitts (11) ein dritter Pumpengehäuseabschnitt (13), der zur Aufnahme eines Antriebs (20) ausgebildet ist, vorgesehen ist,
wobei zu- oder abstromseitig der Pumporgane (15, 16), als Bestandteil der Schmierstoffpumpeneinheit mindestens eine Förderstrommesseinrichtung (21) zur Erfassung eines aktuellen Volumenstroms des geförderten Schmierstoffes vorgesehen ist,
**dadurch gekennzeichnet, dass**
die Förderstrommesseinrichtung (21) in der Schmierstoffpumpeneinheit, vorzugsweise im ersten Pumpengehäuseabschnitt (11) integriert angeordnet ist.

2. Schmierstoffpumpeneinheit nach Anspruch 1,
**dadurch gekennzeichnet, dass**
abstromseitig der Förderstrommesseinrichtung (21) eine Sektionaleinheit (22) zur einstellbaren Aufteilung einer Schmierstoffausgabe auf eine Mehrzahl von Schmierstoffausgängen (46 bis 53) innerhalb der Schmierstoffpumpeneinheit, vorzugsweise innerhalb des ersten Pumpengehäuseabschnittes (11) oder als Anbauteil am ersten Pumpengehäuseabschnitt (11), angeordnet ist.

3. Schmierstoffpumpeneinheit nach Anspruch 2,
**dadurch gekennzeichnet, dass**
die Sektionaleinheit (22) ein in einem Gehäuseabschnitt (44) verschieblich und/oder drehbar gelagertes Aufteilungselement (43) umfasst, das je nach Translations- und/oder Rotationslage des Aufteilungselements (43) bedarfsweise eine Fluidverbindung zwischen einem Einlassabschnitt (45) und einem oder einer Gruppe von im Gehäuseabschnitt (44) ausgebildeten Sektionalauslässen (46 bis 53) herstellt.

4. Schmierstoffpumpeneinheit nach einem der Ansprüche 1 bis 3,
**dadurch gekennzeichnet, dass**
im ersten Pumpengehäuseabschnitt (11) das oder die Pumporgane (15, 16) innerhalb einer ersten Funktionsebene (Pumporganebene) angeordnet sind und eine hierzu parallele, aber versetzt angeordnete zweite Funktionsebene (Auslasskanalebene) definiert ist, in der Kanalabschnitte aller dem Pumporganen (15, 16) zugeordneter Auslasskanäle (26 bis 28) geführt sind.

5. Schmierstoffpumpeneinheit nach Anspruch 4,
**dadurch gekennzeichnet, dass**
innerhalb der zweiten Funktionsebene (Auslasskanalebene) auch die Auslassanschlüsse (29 bis 31) zum Anschluss von zu Schmierstellen führenden Schmierstoffleitungen angeordnet sind.

6. Schmierstoffpumpeneinheit nach einem der Ansprüche 1 bis 5,
**dadurch gekennzeichnet, dass**
innerhalb der im ersten Pumpengehäuseabschnitt (11) geführten Auslasskanäle (26 bis 28) Verschlusspositionen (32, 33) definiert sind, derart, dass über Verschlusselemente (35, 36) eine variable Kopplung der Pumporgane (15, 16) zur Erhöhung bzw. Erniedrigung einer gewünschten Fördermenge bewirkt werden kann.

7. Schmierstoffpumpeneinheit nach einem der Ansprüche 1 bis 6,
**dadurch gekennzeichnet, dass**
das oder die Pumporgane (15, 16) mit einem umlaufenden Exzenter (14), der mit dem Antrieb (20) gekoppelt ist, in Wirkverbindung stehen.

8. Schmierstoffpumpeneinheit nach einem der Ansprüche 1 bis 7,
**dadurch gekennzeichnet, dass**
abstromseitig des oder der Pumporgane (15, 16) ein Drucksensor (39) und/oder ein mechanisches Überdruckventil (40) und/oder ein durch ein Rückflussventil (41) öffenbarer Rückstromkanal der zur Förderung von Schmierstoff an den Eingang des oder der Pumporgane ausgebildet ist, vorgesehen ist.

9. Schmierstoffpumpeneinheit nach Anspruch 8,
**dadurch gekennzeichnet, dass**
das Rückflussventil (41) als steuerbares Ventil ausgebildet ist und die Menge des rückgeführten Schmierstoffes in mehreren diskreten Stufen oder kontinuierlich einzustellen bzw. den Rückstrom einmal komplett zu sperren oder komplett rückzuführen in der Lage ist.

10. Schmierstoffpumpeneinheit nach einem der vorhergehenden Ansprüche,
**dadurch gekennzeichnet, dass**
eine zentrale elektronische Steuereinheit (38) vorgesehen ist, um die Schmierstoffausgabe der Schmierstoffpumpeinheit, vorzugsweise unter Verwendung hinterlegter Steuerprogramme zu steuern.

11. Schmierstoffpumpeneinheit nach Anspruch 10,
**dadurch gekennzeichnet, dass**
die Förderstrommesseinrichtung (21) mit der zentralen elektronischen Steuereinheit (38) in Wirkverbindung steht.

12. Schmierstoffpumpeneinheit nach Anspruch 10 oder 11,
**dadurch gekennzeichnet, dass**
der Antrieb und/oder die Sektionaleinheit mit der zentralen elektronischen Steuereinheit (38) in Wirkverbindung stehen.

## Claims

1. A lubricant pump unit, comprising a pump housing (10) having a plurality of pump housing sections (11, 12, 13),
wherein one or more pump members (15, 16) are provided in a middle, first pump housing section (11) for conveying lubricant,
wherein a second pump housing section (12) comprising a lubricant reservoir (19) is provided above the middle pump housing section (11), and
wherein a third pump housing section (13) configured to receive a drive unit (20) is provided below the middle pump housing section (11),
wherein upstream or downstream from the pump members (15, 16), as an integral part of the lubricant pump unit, at least one flow rate measuring device (21) is provided for detecting a current volume flow of the conveyed lubricant,
**characterized in that**
the flow rate measuring device (21) is arranged to be integrated in the lubricant pump unit, preferably in the first pump housing section (11).

2. The lubricant pump unit according to claim 1,
**characterized in that**
downstream from the flow rate measuring device (21), a sectional unit (22) is provided for adjustably distributing a lubricant supply to a plurality of lubricant outputs (46 to 53) within the lubricant pump unit, preferably within the first pump housing section (11) or as an add-on part on the first pump housing section (11).

3. The lubricant pump unit according to claim 2,
**characterized in that**
the sectional unit (22) comprises a distributing element (43) that is supported to be displaceable and/or rotatable in a housing section (44) and establishes a fluidic communication between an inlet section (45) and one or a group of sectional outlets (46 to 53) formed in the housing section (44) as required depending on the translational and/or rotational position of the distributing element (43).

4. The lubricant pump unit according to any one of claims 1 to 3,
**characterized in that**
in the first pump housing section (11), the pump member(s) (15, 16) are arranged in a first functional level (pump member level), and a second functional level (outlet duct level) is defined that is parallel thereto but arranged to be offset, in which duct sections of all of the outlet ducts (26 to 28) associated to the pump members (15, 16) are guided.

5. The lubricant pump unit according to claim 4,
**characterized in that**
the outlet connections (29 to 31) for connecting lubricant lines leading to lubricant points are also arranged in the second functional level (outlet duct level).

6. The lubricant pump unit according to any one of claims 1 to 5,
**characterized in that**
closure positions (32, 33) are defined within the outlet ducts (26 to 28) guided within the first pump housing section (11) such that a variable coupling of the pump members (15, 16) can be effectuated via closure elements (35, 36) for increasing or decreasing a desired supply rate.

7. The lubricant pump unit according to any one of claims 1 to 6,
**characterized in that**
the pump member(s) (15, 16) are operatively connected to a revolving eccentric (14) that is coupled with the drive unit (20).

8. The lubricant pump unit according to any one of claims 1 to 7,
**characterized in that**
downstream from the pump member(s) (15, 16), a pressure sensor (39) and/or a mechanical pressure relief valve (40) and/or a return flow duct that can be opened by a non-return valve (41) and is formed to convey lubricant to the inlet of the pump member(s) is provided.

9. The lubricant pump unit according to claim 8,
**characterized in that**
the non-return valve (41) is formed as a controllable valve and is able to adjust the amount of returned lubricant in several discrete steps or continuously, or to block the return flow completely or to return it completely in one step.

10. The lubricant pump unit according to any one of the preceding claims,
**characterized in that**
a central electronic control unit (38) is provided to control the lubricant supply of the lubricant pump unit, preferably by using stored control programs.

11. The lubricant pump unit according to claim 10,
**characterized in that**
the flow rate measuring device (21) is operatively connected to the central electronic control unit (38).

12. The lubricant pump unit according to claim 10 or 11,
**characterized in that**
the drive unit and/or the sectional unit is operatively connected to the central electronic control unit (38).

## Revendications

1. Unité de pompe à lubrifiant, comprenant un carter de pompe (10) avec plusieurs sections de carter de pompe (11, 12, 13),
sachant que dans une première section de carter de pompe (11) du milieu sont prévus un ou plusieurs organes de pompe (15, 16) pour le refoulement de lubrifiant,
sachant qu'au-dessus de la section de carter de pompe du milieu (11) est prévue une deuxième section de carter de pompe (12) qui comprend un réservoir de lubrifiant (19), et
sachant qu'en-dessous de la section de carter de pompe du milieu (11) est prévue une troisième section de carter de pompe (13) constituée pour loger un entraînement (20),
sachant qu'en amont ou en aval des organes de pompe (15, 16) est prévu, comme partie intégrante de l'unité de pompe à lubrifiant, au moins un dispositif de mesure de débit de refoulement (21) pour la saisie d'un débit volumétrique actuel du lubrifiant refoulé,
**caractérisée en ce que**
le dispositif de mesure de débit de refoulement (21) est disposé de manière intégrée dans l'unité de pompe à lubrifiant, de préférence dans la première section de carter de pompe (11).

2. Unité de pompe à lubrifiant selon la revendication 1,
**caractérisée en ce que**
en aval du dispositif de mesure de débit de refoulement (21) est disposée une unité sectionnelle (22) pour la distribution réglable d'une délivrance de lubrifiant sur une pluralité de sorties de lubrifiant (46 à 53) à l'intérieur de l'unité de pompe à lubrifiant, de préférence à l'intérieur de la première section de carter de pompe (11) ou comme pièce rapportée sur la première section de carter de pompe (11).

3. Unité de pompe à lubrifiant selon la revendication 2,
**caractérisée en ce que**
l'unité sectionnelle (22) comprend un élément de distribution (43) logé de manière translatable et/ou rotative dans une section de carter (44) et qui réalise, selon la position de translation et/ou de rotation de l'élément de distribution (43), suivant les besoins, une liaison fluidique entre une section d'entrée (45) et une ou un groupe de sorties sectionnelles (46 à 53) constituées dans la section de carter (44).

4. Unité de pompe à lubrifiant selon l'une des revendications 1 à 3,
**caractérisée en ce que**
dans la première section de carter de pompe (1) sont disposés le ou les organes de pompe (15, 16) au sein d'un premier plan fonctionnel (plan d'organes de pompe) et est défini un deuxième plan fonctionnel (plan de canaux de sortie) parallèle à celui-ci, mais disposé de manière décalée, dans lequel des sections de canal de tous les canaux de sortie (26 à 28) associés aux organes de pompe (15, 16) sont menées.

5. Unité de pompe à lubrifiant selon la revendication 4,
**caractérisée en ce que**
au sein du deuxième plan fonctionnel (plan de canaux de sortie) sont aussi disposés les raccords de sortie (29 à 31) pour le raccordement de conduites de lubrifiant menant aux points de lubrification.

6. Unité de pompe à lubrifiant selon l'une des revendications 1 à 5,
**caractérisée en ce que**
au sein des canaux de sortie (26 à 28) menés dans la première section de carter de pompe (11) sont définis des positions d'obturation (32, 33) de telle façon qu'un couplage variable des organes de pompe (15, 16) peut être réalisé via des éléments d'obturation (35, 36) afin d'augmenter ou de diminuer une quantité de refoulement souhaitée.

7. Unité de pompe à lubrifiant selon l'une des revendications 1 à 6,
**caractérisée en ce que**
le ou les organes de pompe (15, 16) sont en liaison effective avec un excentrique (14) rotatif qui est couplé à l'entraînement (20).

8. Unité de pompe à lubrifiant selon l'une des revendications 1 à 7,
**caractérisée en ce que**
en aval de ou des organes de pompe (15, 16) est prévu un capteur de pression (39) et/ou une soupape de surpression (40) mécanique et/ou un canal de retour apte à être ouvert par une soupape de retour (41) et constitué pour refouler du lubrifiant à l'entrée de ou des organes de pompe.

9. Unité de pompe à lubrifiant selon la revendication 8,
**caractérisée en ce que**
la soupape de retour (41) est constituée comme soupape pouvant être commandée et est apte à régler la quantité du lubrifiant retourné en plusieurs étapes discrètes ou de façon continue et/ou à bloquer complètement ou retourner complètement le flux de retour dans une étape.

10. Unité de pompe à lubrifiant selon l'une des revendications précédentes,
**caractérisée en ce que**
une unité de commande électronique centrale (38) est prévue pour commander la délivrance de lubrifiant de l'unité de pompe à lubrifiant, de préférence moyennant des programmes de commande mémorisés.

11. Unité de pompe à lubrifiant selon la revendication 10,
**caractérisée en ce que**
le dispositif de mesure de débit de refoulement (21) est en liaison effective avec l'unité de commande électronique centrale (38).

12. Unité de pompe à lubrifiant selon la revendication 10 ou 11,
**caractérisée en ce que**
l'entraînement et/ou l'unité sectionnelle sont en liaison effective avec l'unité de commande électronique centrale (38).
